# EUROPEAN PATENT APPLICATION

(11) **EP 0 836 015 A2**
(43) Date of publication of application: **15.04.1998**
(21) Application number: 97121534.8
(22) Date of filing: 05.05.1993
(51) Int. Cl.: F16B 31/04

(54) **Method of and device for mechanical tensioning of bolts, studs and the like**

(30) Priority: 07.05.1992 US 879342; 22.04.1993 US 51478
(62) Divisional of application: 93911252.0
(71) Applicant: Junkers, John K., Saddle River New Jersey 07540 (US)
(72) Inventor: Junkers, John K., Saddle River New Jersey 07540 (US)
(74) Representative: Hanson, William Bennett

(57) **Abstract**

For elongating and relaxing a bolt, a stud and the like (1) having an axis and arranged in an object (2), the stud (1) is connected with a first part (4) which is moveable only in an axial direction so as to pull the stud (1) in the axial direction to elongate the stud (1) and thereby to tension it in the object (2) or to relax the stud (1). The first part (4) is moved only in the axial direction by connecting the first part (4) with a second part (3) which is rotatable about the axis. A friction element (5) cooperates with at least one of the parts (3, 4) so as to change friction between the parts (3, 4) so that one of the parts (3, 4) has a higher friction than another of the parts (3, 4). The friction element (5) abuts against an outer surface of the object (2) without being connected to the object (2). Engaging means (13, 8) are provided on the parts (3, 4) for applying forces thereto.

## Description

### Technical Field

The present invention relates to a method of mechanical tensioning of bolts, studs and the like and also to a device for mechanical tensioning the same. More particularly, it relates to a method of and a device for mechanical tensioning of bolts, studs and the like, which are arranged in an object, such as for example a flange and the like.

### Background Art

Methods and devices for tensioning of the above mentioned general type are known in the art. For example, a mechanical nut is utilised, which has two elements movable relative to one another in opposite axial directions to elongate or relax a bolt, a stud and the like. There are many applications where no gaskets are used to seal the two flange portions or where the stud is oversized relative to the required clamping force. Therefore with a steel-to-steel flange connection there is no compression feasible, and with an oversize stud there is no stud elongation feasible, and thus the axial movement of one of the parts of the thusly formed nut becomes impossible. US-A-3,565,472 discloses an assembly for tensioning a stud, in which a friction element is located between the end of a nut and an object to be assembled, the element being splined to a sleeve thread in the nut and to the bolt.

### Disclosure of the Invention

Accordingly, it is an object of the present invention to provide a method of and a device for mechanical tensioning of bolts, studs and the like, which avoids the disadvantages of the prior art.

In keeping with these objects and with others which will become apparent hereinafter, one aspect of the present invention comprises a method of elongating and relaxing a stud, as defined by claim 1.

In accordance with another aspect of the present invention is provided a mechanical tensioning device as defined in claim 7.

When the method is performed and the device is designed in accordance with the present invention, the desired elongation of the stud is obtained in a reliable manner, the required clamping force is applied to the object such as a flange or the like, and all parts of the device form a unitary structure in which the components cannot move relative to one another and a reliable clamping of all components with one another is provided.

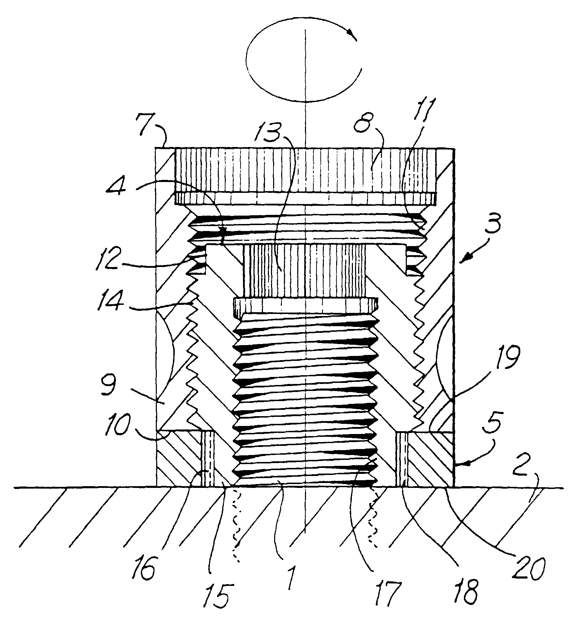

The invention, both as to its construction and its method of operation, together with additional objects and advantages thereof, will be best understood from the following description of specific embodiments when read in connection with the accompanying drawing.

### Brief Description of the Drawing

The single Figure of the drawing is a view showing a cross-section of a device for mechanical tensioning a stud, in accordance with the present invention which implements a new method of mechanical tensioning in accordance with the present invention.

### Best Mode of Carrying out the Invention

A method of and a device D for mechanical tensioning in accordance with the present invention is used for elongating and relaxing a stud 1 which is arranged in an outside object such as a flange 2 and the like. In accordance with the invention, the stud 1 is engaged by an inner part which is identified as a whole with reference numeral 4 and is movable only in an axial direction to pull the stud in the axial direction so as to elongate it and thereby to tension it in the object, or to relax the stud as will be explained hereinbelow. The inner part 4 is moved only in the axial direction by means of an outer part 3 which is connected with the inner part 4 and is rotatable about the axis of the stud, and by means of a friction element 5 which cooperates with at least one of the parts 3 and 4 so as to change friction between the parts 3 and 4 as will be explained hereinbelow.

The outer part 3 has an end portion 7 facing away from the flange 2 and provided with engaging formations, for example splines 8, to be engaged by a tool. The outer part 3 also has a portion 9 which faces toward the flange 2 and has a surface 10 arranged to abut against the friction element 5. Finally, the outer part 3 has an inner thread 11. The outer part 3 is formed as a tubular member provided with the above specified formations.

The inner part 4 has an end portion 12 which faces away from the flange 2 and is provided with a plurality of engaging formations, for example splines 13, to be engaged by a tool. It also has an outer surface provided with a thread 14 which engages with the thread 11 of the inner surface of the outer part 3. The inner part 4 has a portion 15 which is located inside the cooperating part 5 and has an outer surface provided with engaging formations, for example splines 16. Finally, the inner part 4 has an inner surface provided with engaging formations formed for example as an inner thread 17, for engaging with the stud 1. The inner part 4 is also formed as a tubular member.

The friction element 5 is disc-shaped. It is to be located between the end portion 9 of the outer part 3 and the flange 2 on the one hand, and surrounds the portion 15 of the inner part 4 on the other hand. The friction element 5 has an inner surface provided with a plurality of engaging formations, for example splines 18, which engage with the splines 16 of the portion 15 of the inner part 4. The friction element 5 has a surface 19 against which the surface 10 of the outer part 3 abuts, and also an opposite surface 20 which abuts against the outer surface of the flange 2 but is not connected with the flange.

The thread 11 of the outer part 3 and the thread 14 of the inner part 4 have one directional sense, while the thread 17 of the inner part 4 has the opposite directional sense. For example, the thread 17 can be a right-hand thread, while the threads 11 and 14 can be left-hand threads.

The connecting means 11, 14 connecting the inner part 4 with the outer part 3 is thread means, while the connecting means 16, 18 for connecting the inner part 4 with the friction element 5 can be spline means. These connecting means 11, 14 and 16, 18 are axially spaced from one another.

It can be said that the inner part 4 has four surfaces cooperating with other parts and subjectable to friction. In particular, it has the surface of the inner thread 17, the surface of the outer thread 14, the surface abutting against the friction element 5, and the end surface abutting against the flange 2. In contrast, the outer part 3 has only two surfaces which are subjectable to friction, namely the surface of the inner thread 11, and the surface 19 abutting against the friction element 5.

In order to elongate or relax the stud 1 in accordance with the present invention, a tool (not shown) is applied so that it engages the splines 8 of the outer part 3 to move the latter and also engages the splines 13 of the inner part so as to at least hold the part 4. When the outer part 3 is moved to rotate about the axis of the device D and the stud, in a direction to tension the stud, its surface 10 abuts against the surface 19 of the friction element 5 and therefore the outer part 3 cannot move further onto the friction element 5 in the axial direction. Under the action of turning of the outer part 3 and due to the cooperation between the threads 11, 14, the inner part 4 is displaced in the axial direction, upwardly in the drawing, and at the same time does not turn around the axis. During these movements the friction element 4 is neither displaced by being turned around the axis nor in the axial direction. It is immovable relative to the flange 2. The axial upward displacement of the inner part 4 without the turning around the axis causes pulling of the stud 1 upwardly and therefore it is elongating.

Thus due to the cooperation of the parts 3 and 4 and the friction element 5 which imparts a higher frictional drag on the inner part 4 than on the outer part 3, when a force is applied to one of the parts 3, 4 in a rotational direction about the axis (by applying a force to one part, by holding one part and turning another part or by applying a turning force to both parts in opposite directions with equal forces), after elimination of the gaps in the assembly the outer part 3 rotates while the inner part 4 moves only in the axial direction to pull the stud 1 upwardly in the axial direction. When the stud 1 is elongated, a substantial clamping force is applied to the flange 2, so that the parts 3, 4, the friction element 5 and the stud 1 cannot move rotationally or axially relative to the flange 2 and vice versa, so that unitary structure is produced with all components which are immovably clamped with one another.

While the invention has been illustrated and described as embodied in a method of and a device for mechanical tensioning of studs, it is not intended to be limited to the details shown, since various modifications and structural changes may be made without departing in any way from the scope of the invention as defined by the following claims.

## Claims

1. A method of elongating and relaxing a stud (1) having an axis and arranged in an object (2), the method comprising the steps of connecting the stud (1) with a first part (4) of a tensioning device which is movable only in an axial direction of the stud so as to pull the stud (1) in the axial direction to elongate the stud (1) and thereby to tension it in the object (2) or to reduce the pull on the stud and thereby to relax the stud (1); and moving the first part (4) only in the axial direction by connecting the first part (4) with a second part (3) of the tensioning device which is rotatable about said axis; engaging a friction element (5) with at least one of the first and second parts (3, 4) so that one of the parts (4) has a higher frictional resistance to motion than the other of the parts (3) and so that the second part (3) is not firmly engaged with the friction element (5) but instead is freely turnable relative to the friction element (5) while freely abutting against the latter (5); and applying a force to at least one of the parts (3, 4) of the tensioning device whereby the second part (3) is rotated and the first part (4) is moved only in the axial direction to move the stud (1) in the axial direction so as to elongate the stud (1) and apply to the object (2) a clamping force so that the two parts (3, 4), the stud (1) and the friction element (5) cannot rotate or move axially relative to an object (2) surface and vice versa, and a unitary structure is produced with all components which are immovably clamped with one another, characterised in that a holding force is applied to the first part (4) via first engaging means (13) and simultaneously an opposite active force is applied to the second part (3) via second engaging means (8) such that the holding force and the opposite active force are equal forces acting in opposite directions, and the friction element (5) abuts against an outer surface of the object (2) without being connected with the object (2).

2. A method as defined in claim 1, wherein the connecting of the first part (4) with the stud (1) is performed by first thread means (17) and the connecting of the second part (3) with the first part (4) is performed by second thread means.

3. A method as defined in claim 1 and further comprising the step of arranging the friction element (5) between the object (2) and an end portion of the second part (3) which faces the object (2) so that the friction element (5) surrounds an end portion (15) of the first part (4) which faces the object (2).

4. A method as defined in claim 1, wherein the active force is applied by engaging the second part (3) by a tool and moving the second part (3) by a tool about said axis.

5. A method as defined in claim 1, wherein the holding force is applied by engaging the first part (4) by a tool and holding the first part (4) immovably against rotation.

6. A method as defined in claim 1, and further comprising the step of providing first connecting means (11, 14) for connecting the first part (4) with the second part (3) so that the second part (3) moves about said axis, and second connecting means (16, 18) axially spaced from the first connecting means (11, 14) and connecting the first part (4) with the frictional element (5) so that the first part (4) moves only in the axial direction.

7. A mechanical tensioning device for elongating and relaxing a stud (1) having an axis and arranged in an object (2), which device comprises a first part (4) connectable with said stud (1) to pull said stud (1) and movable only in an axial direction to elongate said stud (1) and thereby to tension it in said object (2), or to relax said stud (1); and means for moving said first part (4) in the axial direction and including a second part (3) connected with said first part (4) and rotatable about said axis, and a friction element (5) which engages with at least one of said parts (3, 4) so as to increase frictional drag between said parts (3, 4) so that one of said parts (4) has a higher frictional resistance to motion than the other of said parts (3), said second part (3) not being firmly engaged with said friction element (5) but being freely turnable relative to said friction element (5) while freely abutting against the latter (5), so that when a turning force is applied to at least one of said parts (3, 4), said second part (3) rotates and said first part (4) moves only in said axial direction to move said stud (1) in said axial direction so as to elongate said stud (1) and apply to the object (2) a clamping force so that the two parts (3, 4), the stud (1) and the friction element (5) cannot rotate or move axially relative to the object (2) and vice versa, and a unitary structure is produced with all components which are immovably clamped with one another, characterised in that said first part (4) has first engaging means (13) via which a holding force can be applied to the first part (4), while said second part (3) has second engaging means (8) via which an opposite active force can be simultaneously applied to the second part (3), and the friction element (5) abuts against an outer surface of an object (2) without being connected with the object (2).

8. A tensioning device as defined in claim 7, and further comprising first connecting means (17) which connect said first part (4) with the stud (1) and second connecting means (11, 14) which connect said second part (3) with said first part (4), said connecting means being formed as threads (17; 11, 14) having opposite directional senses.

9. A tensioning device as defined in claim 7, wherein said friction element (5) has a first means (18) formed so that said first part (4) moves in said axial direction relative to said friction element (5) and does not rotate relative to said friction element (5), and second means (19) formed so that said second part (3) can rotate relative to said friction element (5), but said second means (19) stops movement of said second part (3) by engaging onto said friction element (5) in said axial direction.

10. A tensioning device as defined in claim 9, wherein said first means (18) of said friction element (5) includes a plurality of splines (18) extending in an axial direction.

11. A tensioning device as defined in claim 9, wherein said second means (19) of said friction element (5) includes an abutment surface (19) facing toward second part (3) so that said second part (3) abuts against said abutment surface (19) when it is moved in said axial direction onto said friction element (5).

12. A tensioning device as defined in claim 7, wherein each of said parts (3, 4) has an end portion (9, 15) arranged to face the object (2), said friction element (5) being located between said end portion (9) of said second part (3) and the object (2) and surrounds said end portion (15) of said first part (4).

13. A tensioning device as defined in claim 7, wherein the second engaging means of the second part (3) comprise means (8) for engaging by a tool for moving said second part (3) about said axis.

14. A tensioning device as defined in claim 7, wherein the first engaging means of the first part (4) comprise means (13) for engaging by a tool so as to at least hold said first part (4) immovable against rotation.

15. A tensioning device as defined in claim 7, wherein said second part (3) has a threaded inner surface (11), said friction element (5) having a polygonal inner surface, said first part (4) having an outer surface with two axially spaced portions including a first cylindrical axial portion (14) which is threaded and engages with said threaded inner surface (11) of said second part (3) and a second axial portion (15) which is polygonal and engages with said polygonal inner surface of said friction element (5).

16. A tensioning device as claimed in claim 7, and further comprising first connecting means (11, 14) for connecting said first part (4) with said second part (3) so that said second part (3) moves about said axis; and second connecting means (16, 18) axially spaced from said first connecting means (11, 14) and connecting said first part (4) with said friction element (5) so that said first part (4) moves only in said axial direction.

17. A tensioning device as defined in claim 7, wherein when at least one of said first and second parts (3, 4) is engaged and held by a tool, the other of said parts (4, 3) can also be engaged and turned thereby.
